# EUROPÄISCHE PATENTSCHRIFT

(11) **EP 1 957 769 B1**
(45) Veröffentlichungstag und Bekanntmachung des Hinweises auf die Patenterteilung: **25.05.2011**
(21) Anmeldenummer: 06818941.4
(22) Anmeldetag: 01.12.2006
(51) Int. Cl.: F01N 3/20, F01N 3/035, B01D 53/94

(54) **VORRICHTUNG UND VERFAHREN ZUR THERMISCHEN BEHANDLUNG EINES ABGASSTROMS**
DEVICE AND METHOD FOR THE THERMAL TREATMENT OF AN EXHAUST-GAS FLOW
DISPOSITIF ET PROCEDE DE TRAITEMENT THERMIQUE D'UN FLUX DE GAZ D'ECHAPPEMENT

(30) Priorität: 01.12.2005 DE 102005057666
(43) Veröffentlichungstag der Anmeldung: 20.08.2008
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2006/011540
(87) Internationale Veröffentlichungsnummer: WO 2007/062857

(56) Entgegenhaltungen:
- EP-A- 1 479 883
- EP-A1- 0 504 719
- WO-A-2005/052330
- DE-A1- 10 105 185
- DE-A1- 10 221 174
- DE-C1- 4 218 523
- DE-C1- 4 414 904
- FR-A- 2 813 096

## Beschreibung

Die vorliegende Erfindung betrifft eine Vorrichtung zur Behandlung eines Abgasstromes, wobei das Abgas in einem vorgegebenen Temperaturbereich behandelt werden soll.

Hierzu sind so genannte Wärmetauscher bekannt, wobei das Abgas an einer Wärmeaustauschfläche vorbeigeführt wird, die den Abgasstrom zu einem Wärmeaustauschmedium beabstandet. Durch den Kontakt des Abgases mit dieser Wärmeaustauschfläche wird die Temperatur des Abgasstromes beeinflusst Solche Wärmetauscher mit einem separaten Wärmeaustauschmedium sind regelmäßig sehr komplex aufgebaut und deshalb auch schwierig in ein Abgassystem für mobile Fahrzeuges zu integrieren. Darüber hinaus konnte bezüglich bekannter Abgasbehandlungsvorrichtungen festgestellt werden, dass diese teilweise temperatursensibel sind, d. h. nur in einem begrenzten Temperaturbereich die gewünschte Umsetzung von im Abgas enthaltenen Schadstoffen bewirken.

Die EP-A-1 479 883 offenbart ein Verfahren und eine Vorrichtung zur Reinigung von Abgasen mit brennbaren, NOₓ-haltigen und/oder partikel- oder rußförmigen Abgasbestandteilen, wobei das Abgas in einen Abgaswärmetauscher eingeleitet und in dem Abgaswärmetauscher in einem Umlenkbereich umgelenkt wird, so dass es in Gegenrichtung zu dem einströmenden Abgas aus dem Abgaswärmetauscher ausströmt. Dabei wird das einströmende Abgas durch das ausströmende Abgas erwärmt, wobei das Abgas an Reinigungskomponenten gereinigt wird, die innerhalb von dem Abgaswärmetauscher angeordnet sind. Für eine Schadstoffumwandlung und Regeneration der Reinigungskomponenten wird dem Abgas in dem Umlenkbereich mit einer Wärmezufuhreinrichtung, insbesondere einem Brenner, Wärme zugeführt, so dass die Temperatur in dem Umlenkbereich in Abhängigkeit der Betriebsbedingungen der Brennkraftmaschine geregelt wird.

Darüber hinaus ist aus der EP-A-0 504 719 bekannt, dass ein Filter- bzw. Katalysatorkörper zusätzlich als Wärmetauscherkörper für das zu reinigende Abgas ausgebildet ist. Hierbei wird herausgestellt, dass so bei einem Kaltstart oder unter stark kühlenden Betriebsverhältnissen die notwendige Betriebstemperatur des Filters bzw. Katalysators erreicht bzw. ein Absinken während des Betriebes, z.B. im Schubbetrieb, vermieden werden kann. Zur Führung des Abgasstromes kann in dem Zufuhrkanal eine Regel- oder Steuereinrichtung angeordnet sein, von der aus ein Abzweigkanal zu Wärmetauscherrohren und eine Direktleitung zu dem Filter- bzw. Katalysatorkörper fuhren.

Die vorstehend beschriebenen bekannten Verfahren lassen jedoch nur eine ungleichmäßige Wärmezufuhr hin zum Abgasstrom zu und verlangen einen technisch aufwändigen Abgaswärmetauscher.

Deshalb ist es Aufgabe der vorliegenden Erfindung, eine Vorrichtung sowie ein Verfahren zur Behandlung eines Abgasstromes anzugeben, welches die vorstehend geschilderten technischen Probleme zumindest teilweise lösen bzw. minimieren. Insbesondere soll eine Vorrichtung zur Behandlung eines Abgasstromes angegeben werden, welche einen vergleichsweise einfachen Aufbau hat und gleichzeitig die Kontrolle des Abgasstromes hinsichtlich der Temperatur ohne separates Wärmeaustauschmedium ermöglicht Darüber hinaus soll auch ein Verfahren angegeben werden, welches eine besonders effiziente und mit geringem Aufwand aufrecht zu erhaltende Umwandlung von im Abgas enthaltenen Schadstoffen bewirkt.

Diese Aufgaben werden gelöst mit einer Vorrichtung zur Behandlung eines Abgasstromes gemäß den Merkmalen des Patentanspruchs 1 sowie einem Verfahren zur Behandlung eines Abgasstromes mit den Schritten des Patentanspruchs 10. Weitere vorteilhafte Ausgestaltungen sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen.

Die erfindungsgemäße Vorrichtung zur Behandlung eines Abgasstroms weist mindestens einen Hinströmkanal mit einem vorderen Bereich und einem hinteren Bereich sowie mindestens einen Rückströmkanal auf, wobei in dem hinteren Bereich des mindestens einen Hinströmkanals eine erste Beschichtung vorgesehen ist, welche eine exotherme Reaktion des Abgasstromes unterstützt und im vorderen Bereich des Hinströmkanals Mittel zum Wärmeübergang aus einem Rückströmkanal ausgebildet sind.

Bezüglich der Ausgestaltung des Hinströmkanal und des Rückströmkanals ist vorgesehen, dass diese nach dem Gegenstromprinzip zueinander ausgerichtet sind. Dabei weisen sie insbesondere die gleiche Länge auf und erstrecken sich im Wesentlichen parallel zueinander. Der Hinströmkanal ist zudem in zumindest zwei Teilbereiche unterteilt, nämlich einen vorderen Bereich und einen hinteren Bereich. Der vordere Bereich ist nahe des Kanalanfangs angeordnet, erstreckt sich insbesondere vom Kanalanfang bis hin zum hinteren Bereich. Es ist jedoch auch möglich, dass sowohl stromaufwärts und/oder stromabwärts des vorderen Bereichs ein weiterer Teilbereich vorgesehen ist Ebenso wird der hintere Bereich nahe dem Kanalende des Hinströmkanals angeordnet, wobei er sich bevorzugt von dem Kanalende bis in innen liegende Bereiche des Hinströmkanals erstreckt.

In dem hinteren Bereich des mindestens einen Hinströmkanals ist weiter eine erste Beschichtung vorgesehen, welche eine exotherme Reaktion des Abgasstroms unterstützt. Das heißt mit anderen Worten, dass nur in diesem hinteren Bereich beispielsweise eine Beschichtung vorgesehen sein kann, die einen die Oxidation von Bestandteilen des Abgasstromes fordernden Edelmetall-Katalysator aufweist, wie beispielsweise Platin, Rhodium oder Palladium Mittel dieser ersten Beschichtung werden also chemische Reaktionen im Abgas motiviert, die unter Wärmeabgabe ablaufen, so dass es insgesamt zu einer Aufheizung des Abgasstromes kommt. Es ist bevorzugt, dass alle Hinströmkanäle mit einem entsprechenden hinteren Bereich ausgeführt sind, also eine entsprechende erste Beschichtung ausweisen.

Im vorderen Bereich des Hinströmkanals sind nun Mittel zum Wärmeübergang aus einem Rückströmkanal ausgebildet Das bedeutet mit anderen Worten, dass das im hinteren Bereich des Hinströmkanals aufgeheizte Abgas bei der Rückführung wieder am vorderen Bereich des Hinströmkanals vorbeigeführt wird, wobei ein Wärmeübergang des heißeren Abgases im Rückströmkanal hin zum eintretenden Abgasstrom des Hinströmkanals erfolgt Dabei ist die exotherme Reaktion im hinteren Bereich des Rückströmkanals vorteilhafterweise so ausgebildet, dass beim rückströmenden Abgasstrom eine um mindestens 50°C höhere Temperatur vorliegt, als bei dem in den Hinströmkanal eintretenden Abgasstrom. Ein besonders einfaches Mittel zur Realisierung eines Wärmeübergangs umfasst eine gemeinsame Wand aus einem gut wärmeleifähigen Material, wobei diese vorteilhafterweise eine sehr geringe oberflächenspezifische Wärmekapazität aufweist. Eine solche Wand kann z. B. mit Hilfe einer dünnen Metallfolie verwirklicht werden.

Bei der vorrichtung sind weiterhin Zuführmittel für den Abgasstrom in den mindestens einen Hinströmkanal vorgesehen, wobei ein veränderlicher Gaseintrittsort realisiert ist. Das meint insbesondere, dass der Gaseintrittsort im Hinblick auf die Bereiche des Hinströmkanals variabel ist. Damit wird das Ziel verfolgt, die Temperaturerhöhung des eintretenden Abgasstromes im Hinströmkanal variieren zu können, in dem dieser Abgasstrom mehr oder weniger dem Wärmeübergang im vorderen Bereich oder aber der exothermen Reaktion im hinteren Bereich ausgesetzt wird.

In diesem Zusammenhang ist es vorteilhaft, dass die Zuführmittel eine Bimetallklappe umfassen. Ein Bimetall (auch Thermobimetall) ist in der Regel ein Metallstreifen aus zwei Schichten unterschiedlichen Materials, die miteinander stoffschlüssig oder formschlüssig verbunden sind. Charakteristisch ist die Veränderung der Form bei Temperaturänderung. Diese äußert sich als Verbiegung. Ursache ist der unterschiedliche Längenausdehnungkoeffizient der verwendeten Metalle. Diese Metalle können zum Beispiel Zink und Stahl sein. Eine Bimetallklappe hat demnach die Eigenschaft, dass sie sich in Folge unterschiedlicher Temperaturen verschieden stark verformt. Bei einer Führung des eintretenden Abgasstromes über eine solche Klappe kommt es also zu einer wiederholbaren Verformung, die so ausgelegt werden kann, dass in Abhängigkeit der Verformung der Bimetallklappe der Gaseintrittsort verändert wird.

Nach einer vorteilhaften Weiterbildung der Vorrichtung ist im mindestens einen Rückströmkanal eine zweite Beschichtung vorgesehen. Besonders bevorzugt ist dabei die Ausgestaltung, bei der alle Rückströmkanäle der Vorrichtung mit einer zweiten Beschichtung ausgebildet sind. Die zweite Beschichtung kann sowohl in der Nachbarschaft des vorderen Bereichs des Hinströmkanals als auch bzw. alternativ dazu in der Nachbarschaft des hinteren Bereichs des Hinströmkanals ausgebildet sein. Besonders bevorzugt ist die zweite Beschichtung jedoch in einem Bereich des Rückströmkanals angeordnet, der von der Gaseintrittsseite des heißen Abgases entfernt liegt, insbesondere mindestens 50 mm oder sogar 100 mm.

Bei dieser zweiten Beschichtung handelt es sich bevorzugt um eine temperaturempfindliche Beschichtung. Damit ist insbesondere gemeint, dass die zweite Beschichtung einen relativ eng begrenzten Wirkbereich hinsichtlich der auftretenden Temperaturen hat. Beispiele für eine solche zweite Beschichtung, die temperaturempfindlich ist, sind Beschichtungen zum Adsorbieren von Stickoxiden oder Beschichtungen zur selektiven katalytischen Reaktion (so genannte SCR-Beschichtungen). Ganz besonders bevorzugt erstreckt sich dieser Bereich mit der zweiten Beschichtung nicht zwangsläufig bis zum Gasaustritt aus dem Rückströmkanal, da gerade dieser Bereich zumindest teilweise für den Wärmeübergang hin zum Hinströmkanal genutzt werden soll. Dabei ist klar, dass auch noch weitere Beschichtungen bzw. Einbauten in dem Rückströmkanal vorgesehen sein können.

Einer vorteilhaften Weiterbildung der Vorrichtung zufolge weist der vordere Bereich des Hinströmkanals eine Erstreckung von mindestens 50 mm auf. Für einen besonders innigen Wärmeaustausch können auch größere Erstreckungen gewählt werden, beispielsweise bis 150 mm. Darüber hinaus sollte die Erstreckung nicht erhöht werden, da sonst die Vorrichtung unter Umständen nicht mehr so kompakt aufgebaut werden kann, dass sie für eine mobile Anwendung geeignet ist. Ganz besonders bevorzugt liegt die Erstreckung in einem Bereich von 60 bis 120 mm.

Einer weiteren Ausführungsform der Vorrichtung zufolge ist zwischen dem mindestens einen Hinströmkanal und dem mindestens einem Rückströmkanal ein Umlenkbereich vorgesehen, wobei zumindest eine der folgenden Komponenten wenigstens teilweise dort angeordnet ist: Partikelfilter, katalytischer Konverter, Messfühler, Reaktionsmitteleinlass. Bezüglich des Umlenkbereichs ist anzumerken, dass dieser sowohl einen einzelnen Hinströmkanal mit einem einzelnen Rückströmkanal verbinden kann, es ist jedoch auch möglich, dass eine Mehrzahl von Hinströmkanälen mit einer Mehrzahl von Rückströmkanälen über einen gemeinsamen Umlenkbereich verbunden wird. Direkt im Inneren des Umlenkbereichs und/oder in dessen Nähe können nun also weitere Komponenten zur Abgasbehandlung und/oder zur Überwachung des Abgasstromes positioniert werden. Beispielhaft sind hier ein Partikelfilter zum zumindest zeitweisen Zurückhalten von im Abgasstrom mitgeführten Partikeln, ein katalytischer Konverter zur katalytischen Umsetzung von Bestandteilen des Abgasstromes oder auch ein reaktionsmitteleinlass zum Zusetzen von festen, flüssigen oder gasförmigen Reaktionsmitteln, die beispielsweise die Prozesse im Rückströmkanal unterstützen, wie beispielsweise Harnstoff, Ammoniak, Kohlenwasserstoffe oder dergleichen, aufgeführt. Weiter wird auch vorgeschlagen, dass im Umlenkbereich bzw. in dessen Nähe ein Messfühler vorgesehen ist. Der Messfühler ist insbesondere als Temperatur-Messfühler ausgeführt. Er kann direkt im Umlenkbereich vorgesehen sein, es ist jedoch auch möglich, dass dieser zumindest teilweise im Hinströmkanal und/oder im Rückströmkanal vorgesehen ist.

Weiter wird auch vorgeschlagen, dass eine Mehrzahl Hinströmkanäle und eine Mehrzahl Rückströmkanäle in mindestens einer Schicht angeordnet sind, wobei die mindestens eine Schicht zu mehreren Lagen angeordnet ist. Besonders bevorzugt wird die Schicht mit zumindest einer teilweise strukturierten Metallfolie gebildet, die benachbarte Kanäle trennt. Ganz besonders bevorzugt sind dabei auf der einen Seite der Metallfolie die Hinströmkanäle und auf der anderen Seite die Rückströmkanäle ausgebildet. Zum Aufbau einer entsprechenden Vorrichtung können mehrerer solcher Schichten aufeinander gestapelt und in einem Gehäuse angeordnet werden. Alternativ ist aber auch beispielsweise möglich, dass eine einzelne Schicht mehrfach gewunden in einem Gehäuse positioniert ist.

Gemäß einer bevorzugten Weiterbildung der Vorrichtung weist diese im Bereich einer Eintrittsstirnseite einen freien Querschnitt von zumindest 90 % auf Ganz besonders bevorzugt ist ein freier Querschnitt von zumindest 95%. Die Eintrittsstirnseite ist dabei die Seite der Vorrichtung, die beispielsweise von dem zu behandelnden Abgas angeströmt wird. Um nunmehr ein strömungstechnisch günstiges Anströmverhalten zu ermöglichen, wird hier mit anderen Worten vorgeschlagen, dass nahezu die gesamte Eintrittsstirnseite aus Eintrittsöffnungen der Hinströmkanäle besteht, der freie Querschnitt im wesentlichen aus dem Anströmungsquerschnitt (entspricht zumeist der Eintrittsstirnseite bzw. dem Querschnitt der das Abgas zur Vorrichtung führenden Leitung) minus den Wandstärken der Hinströmkanäle gebildet ist. Damit wird insbesondere eine Gestalt der Eintrittsstirnseite bereitgestellt, die von der Gestalt der Austrittsstirnseite der Vorrichtung verschieden ist. So liegt der freie Querschnitt bezüglich der Austrittsstirnseite für das in die Rückströmkanäle wieder eintretende Abgas deutlich darunter, z.B. bei ca. 50%.

Weiterhin ist bezüglich einer solchen Vorrichtung bevorzugt, dass der mindestens eine Hinströmkanal einen von einer Eintrittsöffnung zu einer Austrittsöffnung verringerten Strömungsquerschnitt hat. Das bedeute mit anderen Worten, dass der Strömungsquerschnitt, in Strömungsrichtung des Abgases gesehen, sprunghaft und/oder kontinuierlich, vorteilhafter Weise in einem kleinen Kanalabschnitt begrenzt, kleiner wird. Zur Verwirklichung eines großen freien Querschnitts im Bereich der Eintrittsstirnseite ist es bevorzugt, dass der Strömungsquerschnitt in einem Abschnitt ausgehend von der Eintrittsöffnung von mindestens 5 mm (Millimeter), insbesondere mindestens 10 mm reduziert wird. Bevorzugt wird die Verringerung des Strömungsquerschnitts allein mittels der Kanalwände bewirkt, im Einzelfall kann aber auch eine (im Wesentlichen gasundurchlässige) Dichtmasse oder dergleichen ebenfalls dafür vorgesehen sein.

Schließlich wird noch eine Vorrichtung als besonders vorteilhaft angesehen, bei der eine Mehrzahl der Hinströmkanäle von mindestens einem rückströmkanal umgeben ist. Das betrifft insbesondere Vorrichtungen, die mit einer Vielzahl von Hinströmkanälen (und Rückströmkanälen) ausgeführt ist, wobei z.B. über die Austrittsstirnseite insgesamt eine Kanaldichte von zumindest 100 cpsi hat (cpsi = Kanäle pro Quadratinch, wobei 1 Quadratinch ca. 6.4516 Quadratzentimeter entspricht), bevorzugt sogar wenigstens 200 cpsi. Die Anordnung der Hinströmkanäle ist nun derart, dass diese (alle) in Umfangsrichtung der Hinströmkanäle betrachtet von einem (bzw. mehreren) Rückströmkanal umgeben sind. Der Umfang eines bzw. jedes Hinströmkanals steht dabei, wenigstens zu 70 %, insbesondere sogar wenigstens 80 %, mit wenigstens einem Rückströmkanal in Wärme austauschenden Kontakt.

All die vorstehend genannten bevorzugten Ausführungsvarianten der Vorrichtung werden vorteilhafter Weise mit einem aus wenigstens teilweise strukturierten Metallfolien aufgebauten Wabenkörper gebildet. Besonders bevorzugt ist dabei eine Ausgestaltung, bei der die Struktur wenigstens einer Metallfolie mit einer sich in Strömungsrichtung ändernden Wellhöhe und/oder Wellweite ausgeführt ist. Gemäß einem weiteren Aspekt der vorliegenden Erfindung wird ein Verfahren zur Behandlung eines Abgasstromes mit zumindest folgenden Schritten vorgeschlagen:
(a) Zufuhr eines Abgasstromes in mindestens einen Hinströmkanal einer Vorrichtung zum Behandeln eines Abgasstromes,
(b) Bewirken einer Temperaturerhöhung des Abgasstromes in folge einer exothermen Reaktion in einem hinteren Bereich des Hinströmkanals.
(c) Rückführen des Abgasstromes in mindestens einem Rückströmkanal der Vorrichtung zum Behandeln eines Abgasstromes,
(d) Bewirken eines Wärmeaustauschs vom Abgasstrom im Rückströmkanal
   hin zu einem vorderen Bereich des mindestens einen Hinströmkanals. Dieses Verfahren findet insbesondere Anwendung bei einer hier erfindungsgemäß beschriebenen Ausgestaltung der Vorrichtung.

Darüber hinaus wird mit Schritt (a) ein in Abhängigkeit eines Parameters des Abgasstromes veränderlicher Gaseintrittsort vorgegeben. Damit ist insbesondere gemeint, dass die Zuführung des Abgasstromes in den Hinströmkanal variiert werden kann, wobei dies in Abhängigkeit eines Parameters des Abgasstromes vorgenommen wird. Dabei kann sich der Parameter auf den Abgasstrom vor, in und/oder nach der Vorrichtung zum Behandeln des Abgasstromes beziehen. Besonders bevorzugt ist dabei, dass die Abhängigkeit eines Parameters des Abgasstromes vor Eintritt in die Vorrichtung berücksichtigt wird. Dabei sind der Hinströmkanal und der Rückströmkanal nach dem Gegenstromprinzip zueinander ausgerichtet.

Bezüglich des Parameters wird vorgeschlagen, dass dieser wenigstens einer aus der folgenden Gruppe ist: Temperatur, Kohlenwasserstoffgehalt, Kohlenmonoxidgehalt, Sauerstoffgehalt. Durch Berücksichtigung der Temperatur vor dem Eintritt in die Vorrichtung kann bestimmt werden, welche Bedingungen im Hinströmkanal bezüglich dieses Abgasstroms vorliegen müssen, damit ein vorgegebener Temperaturbereich im Umlenkbereich bzw. im Rückströmkanal vorliegt. Mittels der Temperatur des Abgasstroms im Umlenkbereich kann beispielsweise kontrolliert werden, ob die vorbestimmten bzw. gewünschten Reaktionen bzw. Temperaturerhöhungen tatsächlich eingetreten sind, wobei gegebenenfalls eine Anpassung des Gaseintrittorts vorgenommen bzw. veranlasst werden kann. In Anbetracht der Tatsache, dass im Hinströmkanal die Temperaturerhöhung zu einem beachtlichen Umfang auf Basis einer exotherm ablaufenden chemischen Reaktion generiert wird, ist die Überwachung bzw. die Erfassung der Abgasstromzusammensetzung bezüglich der darin enthaltenen Reaktanden ratsam, um gegebenenfalls auf die Abgaszusammensetzung einzuwirken oder/und die Reaktionsfreudigkeit des Abgasstromes zu bewerten und somit den Gaseintrittsort entsprechend anzupassen. Zur Erfassung dieser Parameter können die bekannten Messfühler eingesetzt werden.

Gemäß einer weiteren Ausgestaltung des Verfahrens wird auch vorgeschlagen, dass der Parameter berechnet wird. Dabei ist insbesondere gemeint, dass die Abgaszusammensetzung bzw. der Gehalt einer bestimmten Komponente des Abgases berechnet wird. Dies kann beispielsweise mit einem so genannten Rohemissionskennfeld durchgeführt werden, aus dem Informationen in Abhängigkeit des aktuellen Betriebszustandes der Abgasquelle die Rohemissionen im Abgas bestimmt werden können. In ähnlicher Weise können auch bestimmte Temperaturen des Abgases berechnet werden. Dabei kann selbstverständlich zur Kontrolle gleichwohl ein Messfühler vorgesehen sein.

Weiter wird auch vorgeschlagen, dass Schritt (b) so durchgeführt wird, dass bei variierenden Parametern des ankommenden Abgasstromes eine vorbestimmte Temperatur des Abgases beim Verlassen des Hinströmkanals nicht überschritten wird. Ganz besonders bevorzugt wird durch Variierung der Abgaszusammensetzung und/oder des Gaseintrittorts eine gewünschte Temperaturspanne geregelt. Diese vorbestimmte Temperatur liegt dabei bevorzugt in einem Bereich von 400°C bis 600°C und ist insbesondere vom Betriebszustand der Abgasquelle unabhängig. Für den Fall, dass dem Hinströmkanal beispielsweise eine Partikelfalle nachgeschaltet ist, so kann mit Hilfe dieser Temperatur eine kontinuierliche Regeneration gewährleistet werden. Darüber hinaus ist für den Fall, dass dem Hinströmkanal beispielsweise eine temperaturempfindliche, zweite Beschichtung nachgeordnet ist, hier ebenfalls die vorbestimmte Temperatur auf den Wirkbereich dieser zweiten Beschichtung abgestimmt werden.

Weiter wird auch vorgeschlagen, dass die Parameter des ankommenden Abgasstromes unter Berücksichtigung der herrschenden Bedingungen in der Vorrichtung beeinflusst werden. Damit ist insbesondere gemeint, dass die Reaktionsfreudigkeit hinsichtlich der exothermen Reaktion des Abgases in der Vorrichtung erfasst und eine entsprechende Anpassung z. B. der Zusammensetzung des eintretenden bzw. ankommenden Abgasstromes vorgenommen wird. Dies kann zum Beispiel eine Erhöhung des Kohlenwasserstoffgehalts und/oder Kohlenmonoxidgehalts im Abgasstrom umfassen, insbesondere in dem die Betriebsweise der Abgasquelle wie z. B. einer Verbrennungskraftmaschine entsprechend umgestellt wird.

Die Kombination einer erfindungsgemäß beschriebenen Vorrichtung zur Behandlung eines Abgasstromes mit einem Fahrzeug ist sehr bevorzugt. Ebenso wird ein entsprechendes Betriebsverfahren eines Abgassystems eines Fahrzeuges mit einer entsprechenden Vorrichtung zur Behandlung des Abgasstromes, wie es hier erfindungsgemäß beschrieben ist, vorgeschlagen.

Die Erfindung sowie das technische Umfeld werden anhand der Figuren näher erläutert. Es ist darauf hinzuweisen, dass die Figuren besonders bevorzugte Ausführungsbeispiele der Erfindung darstellen, die sie jedoch nicht darauf beschränkt ist. Es zeigen schematisch:
Fig. 1: eine erste Ausführungsvariante der erfindungsgemäßen Vorrichtung,
Fig. 2: ein Detail einer weiteren Ausführungsvariante der Vorrichtung,
Fig. 3: eine Veranschaulichung des Temperaturverlaufs des Abgases beim Durchströmen eines Hinströmkanals,
Fig. 4: ein Fahrzeug mit einem Abgassystem,
Fig. 5: ein Detail einer weiteren Ausführungsvariante der Vorrichtung,
Fig. 6: eine Anordnung umfassend ein Metallfolie zur Bildung einer weiteren Ausführungsvariante der Vorrichtung,
Fig. 7: ein Abgassystem eines Fahrzeuges gemäß einer bevorzugten Ausführungsvariante, und
Fig. 8: ein Abgassystem entsprechend einer weiteren Ausführungsvariante.

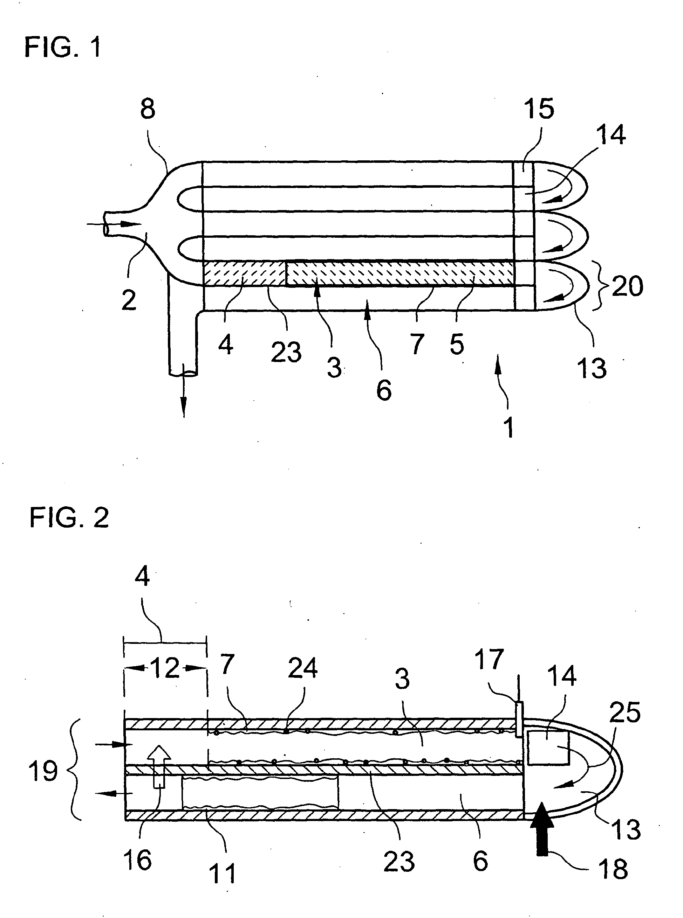

Fig. 1 veranschaulicht eine erste Ausführungsvariante einer Vorrichtung 1 zur Behandlung eines Abgasstromes 2. Die Vorrichtung 1 umfasst mehrere Lagen 20, die jeweils in einer Ebene angeordnete Hinströmkanäle 3 und Rückströmkanäle 6 aufweisen. Der Abgasstrom 2 wird über ein entsprechendes Zuführmittel 8 den Hinströmkanälen 3 zugeführt. Ausgehend von dem Hinströmkanal 3 strömt der Abgasstrom 2 zunächst durch einen katalytischen Konverter 15 in den Umlenkbereich 13, dann durchströmt der Abgasstrom 2 einen Partikelfilter 14, bevor er schließlich in den Rückströmkanal 6 wieder eintritt. Vom Rückströmkanal 6 aus wird das Abgas wieder zusammengeführt und zu weiteren Behandlungseinrichtungen eines Abgassystems weiter geleitet.

Im unteren Teil von Fig. 1 ist nun der nähere Aufbau einer Lage 20 veranschaulicht. Dabei ist ein Hinströmkanal 3 mit einem vorderen Bereich 4 und einem hinteren Bereich 5 ausgebildet. Der direkt benachbart angeordnete Rückströmkanal 6 verläuft parallel dazu und hat die gleiche Länge. Im hinteren Bereich 5 des Hinströmkanals 3 ist eine erste Beschichtung vorgesehen, welche eine exotherme Reaktion des Abgasstromes 2 in diesem Bereich unterstützt. Im vorderen Bereich 4 des Hinströmkanals 3 ist als Mittel zum Wärmeübergang aus dem Rückströmkanal 6 eine gemeinsame Wand 23 ausgebildet. Die Funktion des Hinströmkanals 3 und des Rückströmkanals 6 soll beispielhaft anhand der Darstellungen in Fig. 2 weiter veranschaulicht werden.

Fig. 2 zeigt nun eine Schicht 19 im Detail, wobei oben der Hinströmkanal 3 und unten der Rückströmkanal 6 gezeigt ist, die durch eine gemeinsame Wand 23 voneinander beabstandet sind. Das Abgas strömt in Strömungsrichtung 25 nun zunächst in den vorderen Bereich 4 des Hinströmkanals 3 ein, der mit einer Erstreckung 12 im Bereich von 80 bis 120 mm ausgeführt ist. Direkt im Anschluss daran fügt sich der hintere Bereich 5 an, der eine erste Beschichtung 7 mit Edelmetall-Katalysatoren 24 umfasst. In diesem Bereich mit der ersten Beschichtung 7 wird eine exotherme Reaktion des Abgases motiviert, die mit einer Temperaturerhöhung des Abgasstromes 2 einhergeht. Zur Überprüfung der mittels dieser exothermen Reaktion erreichten Temperaturerhöhung ist am Kanalende des Hinströmkanals 3 bzw. im Übergangsbereich hin zum Umlenkbereich 13 ein Messfühler 17 zur Bestimmung der Temperatur vorgesehen. Am Kanalende des Hinströmkanal 3 bzw. im Umlenkbereich 13 ist nun ein Partikelfilter 14 vorgesehen, wobei die Temperatur des Abgasstromes so geregelt wird, dass dieser sich kontinuierlich regeneriert. Nach dem Durchströmen des Partikelfilters 14 strömt das Abgas in Strömungsrichtung 25 weiter hin zum Rückströmkanal 6. Vor dem Eintritt in den Rückströmkanal 6 wird mittels eines Reaktionsmitteleinlasses 18 noch Reaktionsmittel zugegeben, wie beispielsweise fester Harnstoff. Im Rückströmkanal 6 (und zwar von Einströmbereich bis zum Ausströmbereich entfernt) ist eine zweite Beschichtung 11 vorgesehen, beispielsweise eine SCR-Beschichtung. Nach dem Abschnitt mit der zweiten Beschichtung 11 strömt das immer noch relativ heiße Abgas an der Wand 23 vorbei, so dass es zu einem Wärmeaustausch 16 im vorderen Bereich 4 des Hinströmkanals 3 kommt.

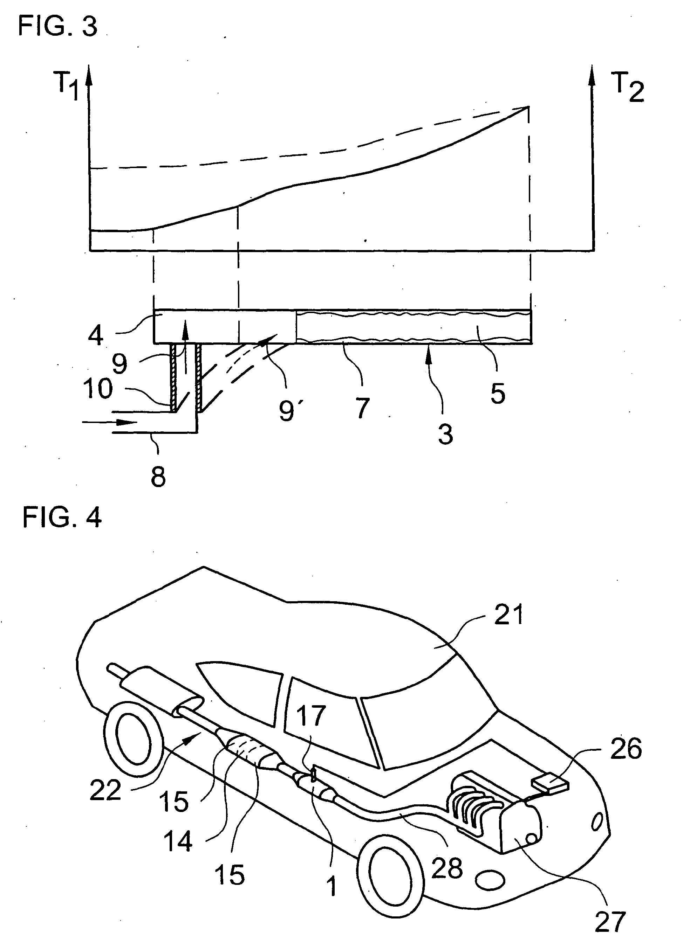

Die Einflüsse des Gaseintrittorts 9 im Hinblick auf den Hinströmkanal 3 soll anhand der Fig. 3 weiter veranschaulicht werden. Oben in Fig. 3 ist ein Diagramm dargestellt, welches den Temperaturverlauf des Abgasstromes vor, innerhalb und nach Verlassen des Hinströmkanals 3 schematisch veranschaulicht. Mit T₁ ist dabei die Temperatur des Abgasstromes 2 charakterisiert, die er vor Eintritt in den Hinströmkanal 3 aufweist. Dementsprechend wird mit T₂ die Temperatur beschrieben, die der Abgasstrom bei bzw. nach Verlassen des Hinströmkanals 3 aufweist.

Der Hinströmkanal 3 selbst ist nun schematisch unterhalb des Diagramms veranschaulicht. Der Hinströmkanal 3 weist links einen vorderen Bereich 4 und rechts einen hinteren Bereich 5 auf, wobei der hintere Bereich 5 mit einer ersten Beschichtung 7 ausgeführt ist. In den vorderen Bereich 4 des Hinströmkanals 3 ragt ein Zuführmittel 8 für den Abgasstrom 2, wobei die Zuführmittel 8 Bimetallklappen 10 umfassen, die den Gaseintrittsort 9 bestimmen. Diese Ausführungsvariante der Zuführmittel 8 bzw. des Gaseintrittortes 9 wird beispielsweise im "Normalbetrieb" einer Verbrennungskraftmaschine eingestellt. Dabei strömt das Abgas mit einer relativ niedrigen Temperatur T₁ in den vorderen Bereich 4 ein, wobei es aufgrund des Wärmeübergangs vom (nicht dargestellten) Rückführkanal eine erste Temperaturerhöhung erfährt. Im Anschluss daran durchströmt das Abgas den hinteren Bereich 5 mit der ersten Beschichtung 7, wobei infolge der exothermen Reaktion eine weitere Temperaturerhöhung festzustellen ist, so dass letztendlich eine bestimmte bzw. vorgegebene Temperatur T₂ erreicht wird.

In besonderen Betriebsbedingungen der Verbrennungskraftmaschine, die dieses Abgas produziert, ist es jedoch vorteilhaft, eine andere thermische Behandlung des Abgases zu erzielen. So kann beispielsweise während der Kaltstartphase einer solchen Verbrennungskraftmaschine oder aber auch bei erhöhten Eintrittstemperaturen T₁ des Abgasstromes ein anderer Gaseintrittsort 9' gewählt werden. Dies ist in Fig. 3 durch die gestrichelte Ausführung des Gaseintrittorts 9' sowie dem gestrichelt dargestellten Verlauf in dem Diagramm veranschaulicht. Dabei ist nunmehr die Temperatur T₁ deutlich höher. Um im Wesentlichen dieselbe Endtemperatur T₂ zu erzielen, wird der Gaseintrittsort 9' mehr zum hinteren Bereich 5 des Hinströmkanals 3 verlegt, so dass z. B. ein Teil des Wärmeaustauschs mit dem Rückströmkanal nicht stattfindet oder sogar ein Teil der ersten Beschichtung 7 nicht genutzt wird.

Bevorzugt ist dabei, dass mindestens zwei Gaseintrittsorte 9 realisierbar sind, es ist jedoch unter Umständen auch vorteilhaft, dass der Gaseintrittsort 9 stufenlos eingestellt werden kann.

Fig. 4 zeigt nunmehr das bevorzugte Anwendungsgebiet der Vorrichtung bzw. des Verfahrens. Gezeigt ist ein Fahrzeug 21 mit einem Abgassystem 22. Das Fahrzeug 21 weist eine Verbrennungskraftmaschine 27 (beispielsweise einen Otto- oder Dieselmotor) auf, der den Abgasstrom, der zu reinigen ist, produziert. Der Abgasstrom strömt durch eine Abgasleitung 28 hin zu einer erfindungsgemäßen Vorrichtung 1, wobei dort das erfindungsgemäße Verfahren durchgeführt wird. Zur Überwachung der Vorgänge in der Vorrichtung 1 ist ein Messfühler 17 zur Bestimmung der Temperatur des Abgases vorgesehen. Für den Fall, dass die mit dem Messfühler 17 gemessene Temperatur nicht im gewünschten Bereich liegt, kann beispielsweise durch eine entsprechende Motorsteuerung 26 die Zusammensetzung des Abgasstromes hinsichtlich der darin enthaltenen Reaktanden beeinflusst werden.

Nach Verlassen der Vorrichtung 1 durchströmt das Abgas weitere Abgasbehandlungseinheiten, wie beispielsweise einen katalytischen Konverter 15 zur Oxidation eines Bestandteils des Abgasstroms, einem Partikelfilter 14 und eine weitere Abgasbehandlungseinheit wie einen katalytischen Konverter 15 zur Reduktion eines anderen Bestandteils des Abgasstroms. Nach dieser Reinigung bzw. Umsetzung des Abgasstroms kann dieser an die Umgebung abgegeben werden.

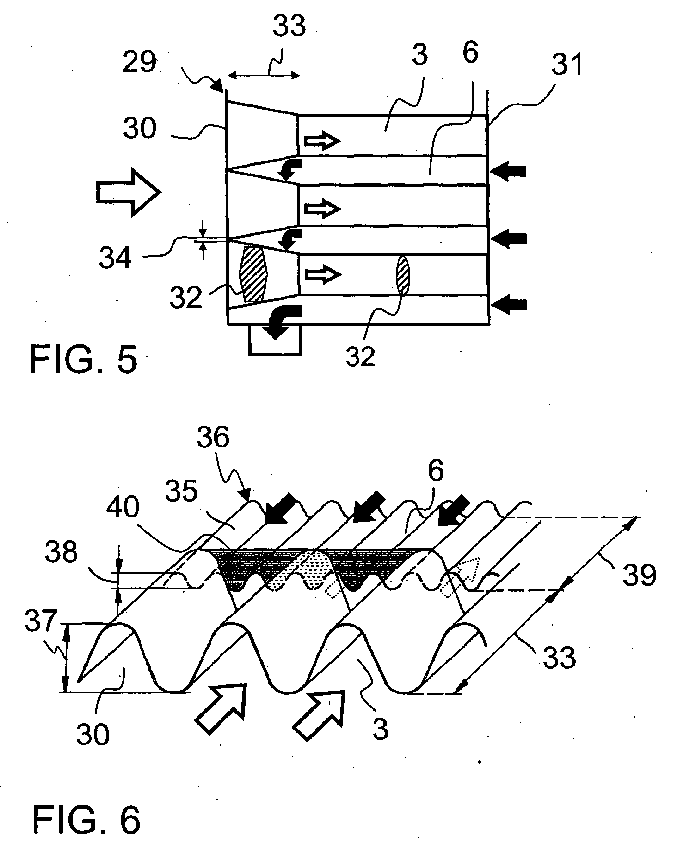

Die Fig. 5 veranschaulicht schematisch den Aufbau einer Vorrichtung, bei der im Bereich einer Eintrittsstirnseite 29 ein freien Querschnitt von zumindest 90 % vorgesehen ist. Wie dort zu entnehmen ist, wird die Eintrittsstirnseite 29 lediglich durch die Wandstärke 34 der Kanäle reduziert. Um ausgehend von der Eintrittsstirnseite 29 die Hinströmkanäle 3 nun benachbart zu den Rückströmkanälen 6 anzuordnen, wird der Strömungsquerschnitt 32 der Hinströmkanäle 3 von einer Eintrittsöffnung 30 zu einer Austrittsöffnung 31 verringert. Dies erfolgt bei der veranschaulichen Ausführungsvariante kontinuierlich über den Abschnitt 33, der sich an die Eintrittsstirnseite 29 anschließt. Grundsätzlich kann sich auch die Form des Strömungsquerschnitts 32 des Hinströmkanals 3 verändern, beispielsweise von polygonal zu halbkreisartig oder dergleichen, wie hier auch angedeutet. Die hier veranschaulichten Maßnahmen tragen insbesondere dazu bei, dass die Vorrichtung Hinströmkanäle 3 hat, die (alle) von mehreren Rückströmkanälen 6 umgeben sind, so dass die Vorrichtung in der Art eines Rohrbündelwärmetauschers ausgeführt ist.

In der Fig. 6 ist nunmehr ein Beispiel für den prinzipiellen Aufbau der vorstehend beschrieben Ausführungsvariante dargestellt, die mit Metallfolien 35 aufgebaut ist. Die Metallfolie 35 weist hierbei eine gewellte Struktur 36 auf, die im Wesentlichen die Kanäle begrenzt, ggf. zusammen mit einer (hier nicht dargestellten) anliegenden glatten Metallfolie. Der große freie Querschnitt im Bereich der Eintrittsstirnseite 29 wird hier mit einer ersten Strukturhöhe 37 verwirklicht. In einem Abschnitt 33 nach der Eintrittsstirnseite 29 wird der Strömungsquerschnitt des Hinströmkanals 3 sprunghaft reduziert. Dies erfolgt unter Einsatz einer zweiten Strukturhöhe 38 der Metallfolie 35 und einem Dichtmittel 40, welches das einströmende Abgas in die (unteren) Hinströmkanäle 3 im Bereich der Wärmeaustauschstrecke 39 ablenkt. Oberhalb der Metallfolie 35 sind hier im Bereich der Wärmeaustauschstrecke 39 die Rückströmkanäle 6 ausgebildet. Es sei hier darauf hingewiesen, dass die veranschaulichten Größenverhältnisse regelmäßig nicht maßstäblich sind, insbesondere ist die Wärmeaustauschstrecke 39 deutlich größer als der Abschnitt 33, der ca. 5 mm bis 10 mm beträgt. Der hydraulische Durchmesser der Hinströmkanäle 3 im Bereich der Wärmeaustauschstrecke 39 beträgt bevorzugt 1 bis 4 mm, insbesondere 2 bis 3 mm.

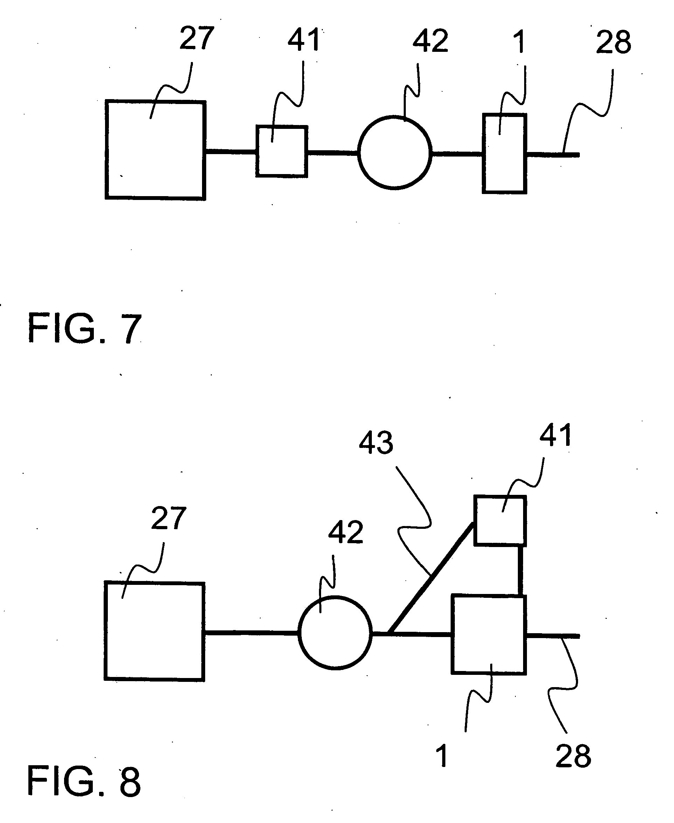

Die Fig. 7 und 8 betreffen zwei besonders bevorzugte Ausführungsvarianten eines mobilen Abgassystems für Kraftfahrzeuge, wobei ein verbessertes Kaltstartverhalten ermöglicht wird. Dabei wird gemäß Fig. 7 vorgeschlagen, dass das von der Verbrennungskraftmaschine 27 kommende Abgas zunächst einem kleinvolumigen Oxidationskatalysator 41 zugeführt wird, wo die hier noch gering auftretenden Rohemissionen konvertiert werden und eine deutliche Erhöhung der Abgastemperatur bewirkt wird. Anschließend strömt das Abgas ggf. durch einen in der Abgasleitung 28 positionierten Turbolader 42, bevor es die erfindungsgemäße Vorrichtung 1 erreicht. Bei der in Fig. 8 veranschaulichten Variante ist ein Bypass 43 zur Vorrichtung 1 geschaffen, in dem das Abgas ebenfalls einem Oxidationskatalysator 41 zugeführt wird. Das "vorgewärmte" Abgas wird dann bevorzugt in mindestens einen Teil der Rückströmkanäle geleitet, um die Vorrichtung 1 aufzuwärmen. Ist dessen Starttemperatur erreicht, kann der Abgasstrom in die Hinströmkanäle der Vorrichtung 1 eingeleitet werden.

Die vorstehenden Erläuterungen sollen die Erfindung nicht beschränken. Insbesondere sollen technische Details, die mit Bezug auf eine Figur erläutert wurden gleichermaßen auch in Ausführungsvarianten integrierbar sein, die in anderen Figuren veranschaulicht sind. Die hier beschriebene Vorrichtung sowie das beschriebene Verfahren ermöglichen einen besonders kompakten und einfachen Aufbau einer entsprechenden Vorrichtung zur Temperaturbeeinflussung des Abgasstroms und gleichzeitige Reinigung des Abgasstroms.

### Bezugszeichenliste

- 1: Vorrichtung
- 2: Abgasstrom
- 3: Hinströmkanal
- 4: vorderen Bereich
- 5: hinteren Bereich
- 6: Rückströmkanal
- 7: erste Beschichtung
- 8: Zuführmittel
- 9: Gaseintrittsort
- 10: Bimetallklappe
- 11: zweite Beschichtung
- 12: Erstreckung
- 13: Umlenkbereich
- 14: Partikelfilter
- 15: katalytischer Konverter
- 16: Wärmeaustausch
- 17: Messfühler
- 18: Reaktionsmitteleinlass
- 19: Schicht
- 20: Lage
- 21: Fahrzeug
- 22: Abgassystem
- 23: Wand
- 24: Edelmetall-Katalysator
- 25: Strömungsrichtung
- 26: Motorsteuerung
- 27: Verbrennungskraftmaschine
- 28: Abgasleitung
- 29: Eintrittsstirnseite
- 30: Eintrittsöffnung
- 31: Austrittsöffnung
- 32: Strömungsquerschnitt
- 33: Abschnitt
- 34: Wandstärke
- 35: Metallfolie
- 36: Struktur
- 37: erste Strukturhöhe
- 38: zweite Strukturhöhe
- 39: Wärmeaustauschstrecke
- 40: Dichtmittel
- 41: Oxidationskatalysator
- 42: Turbolader
- 43: Bypass

## Patentansprüche

1. Vorrichtung (1) zur Behandlung eines Abgasstromes (2) aufweisend mindestens einen Hinströmkanal (3) mit einem vorderen Bereich (4) und einem hinteren Bereich (5) sowie mindestens einen Rückströmkanal (6), wobei in dem hinteren Bereich (5) des mindestens einen Hinströmkanals (3) eine erste Beschichtung (7) vorgesehen ist, welche eine exotherme Reaktion des Abgasstromes (2) unterstützt und im vorderen Bereich (4) des Hinströmkanals (3) Mittel zum Wärmeübergang aus einem Rückströmkanal (6) ausgebildet sind; wobei der mindestens eine Hinströmkanal (3) und der mindestens eine Rückströmkanal (6) nach dem Gegenstromprinzip zueinander ausgerichtet sind, **dadurch gekennzeichnet**, das Zuführmittel (8) für den Abgasstrom (2) in dem mindestens einen Hinströmkanal (3) vorgesehen sind.
dass ein veränderlicher Gaseintrittsort (9) im Hinströmkanal (3) realisiert ist.

2. Vorrichtung (1) nach Patentanspruch 1 bei der die Zuführmittel (8) eine Bimetallklappe (10) umfassen.

3. Vorrichtung (1) nach einem der vorhergehenden Patentansprüche, bei der in dem mindestens einen Rückströmkanal (6) eine zweite Beschichtung (11) vorgesehen ist.

4. Vorrichtung (1) nach einem der vorhergehenden Patentansprüche, bei der der vordere Bereich (4) eine Erstreckung (12) von mindestens 50 mm aufweist.

5. Vorrichtung (1) nach einem der vorhergehenden Patentansprüche, bei der zwischen dem mindestens einen Hinströmkanal (3) und dem mindestens einen Rückströmkanal (6) ein Umlenkbereich (13) vorgesehen ist, wobei zumindest eine der folgenden Komponenten wenigstens teilweise dort angeordnet ist: Partikelfilter (14), katalytischer Konverter (15), Messfühler (17), Reaktionsmitteleinlass (18).

6. Vorrichtung (1) nach einem der vorhergehenden Patentansprüche, bei der eine Mehrzahl Hinströmkanäle (3) und eine Mehrzahl Rückströmkanäle (6) in mindestens einer Schicht (19) angeordnet sind, wobei die mindestens eine Schicht (19) zu mehreren Lagen (20) angeordnet ist.

7. Vorrichtung (1) nach einem der vorhergehenden Patentansprüche, bei der die Vorrichtung (1) im Bereich einer Eintrittsstirnseite (29) einen freien Querschnitt von zumindest 90 % aufweist.

8. Vorrichtung (1) nach einem der vorhergehenden Patentansprüche, bei der der mindestens eine Hinströmkanal (3) einen von einer Eintrittsöffnung (30) zu einer Austrittsöffnung (31) verringerten Strömungsquerschnitt (32) hat.

9. Vorrichtung (1) nach einem der vorhergehenden Patentansprüche, bei der eine Mehrzahl der Hinströmkanäle (3) von mindestens einem Rückströmkanal (6) umgeben ist.

10. Verfahren zur Behandlung eines Abgasstromes (2) mit zumindest folgenden Schritten:
(a) Zufuhr eines Abgasstromes (2) in mindestens einen Hinströmkanal (3) einer Vorrichtung (1) zum Behandeln eines Abgasstromes,
(b) Bewirken einer Temperaturerhöhung des Abgasstroms (2) infolge einer exothermen Reaktion in einem hinteren Bereich (5) des Hinströmkanals (3),
(c) Rückführen des Abgasstromes (2) in mindestens einem Rückströmkanal (6) der Vorrichtung (1) zum Behandeln eines Abgasstromes,
(d) Bewirken eines Wärmeaustauschs vom Abgasstrom (2) im Rückströmkanal (6) hin zu einem vorderen Bereich (4) des mindestens einen Hinströmkanals (3);
wobei der mindestens eine Hinströmkanal (3) und der mindestens eine Rückströmkanal (6) nach dem Gegenstromprinzip zueinander ausgerichtet sind, **dadurch gekennzeichnet dass** mit Schritt (a) in Abhängigkeit eines Parameters des Abgasstromes (2) ein veränderlicher Gaseintrittsort (9) im Hinströmkanal (3) vorgegeben wird.

11. Verfahren nach Patentanspruch 10, bei dem der Parameter des Abgasstromes (2) wenigstens einer aus der folgenden Gruppe ist: Temperatur, Kohlenwasserstoffgehalt, Kohlenmonoxidgehalt, Sauerstoffgehalt.

12. Verfahren nach Patentanspruch 10 oder 11, bei dem der Parameter berechnet wird.

13. Verfahren nach einem der Patentansprüche 10 bis 12, bei dem Schritt (b) so durchgeführt wird, dass bei variierenden Parametern des ankommenden Abgasstromes (2) eine vorbestimmte Temperatur des Abgases beim Verlassen des Hinströmkanals (3) nicht überschritten wird.

14. Verfahren nach einem der Patentansprüche 10 bis 13, bei dem die Zusammensetzung des ankommenden Abgasstromes (2) unter Berücksichtigung der herrschenden Bedingungen in der Vorrichtung (1) beeinflusst werden.

15. Fahrzeug (21) aufweisend eine Vorrichtung (11) zur Behandlung eines Abgasstromes (2) nach einem der Patentansprüche 1 bis 9.

## Claims

1. Device (1) for the treatment of an exhaust-gas flow (2) having at least one inflow channel (3) with a front region (4) and a rear region (5) and at least one return flow channel (6), wherein a first coating (7) is provided in the rear region (5) of the at least one inflow channel (3), which first coating (7) assists an exothermic reaction of the exhaust-gas flow (2), and means for the transfer of heat from a return flow channel (6) are formed in the front region (4) of the inflow channel (3);
wherein the at least one inflow channel (3) and the at least one return flow channel (6) are aligned with respect to one another according to the counterflow principle,
**characterized in that**
supply means (8) for the exhaust-gas flow (2) are provided in the at least one inflow channel (3), so that a variable gas inlet location (9) is realized in the inflow channel (3).

2. Device (1) according to patent claim 1, in which the supply means (8) comprise a bimetal flap (10).

3. Device (1) according to one of the preceding patent claims, in which a second coating (11) is provided in the at least one return flow channel (6).

4. Device (1) according to one of the preceding patent claims, in which the front region (4) has an extent (12) of at least 50 mm.

5. Device (1) according to one of the preceding patent claims, in which a deflecting region (13) is provided between the at least one inflow channel (3) and the at least one return flow channel (6), wherein at least one of the following components are arranged at least partially there:
particle filter (14), catalytic converter (15), measuring sensor (17),
reactant inlet (18).

6. Device (1) according to one of the preceding patent claims, in which a plurality of inflow channels (3) and a plurality of return flow channels (6) are arranged in at least one tier (19), wherein the at least one tier (19) being arranged so as to form a plurality of layers (20).

7. Device (1) according to one of the preceding patent claims, in which the device (1) has a free cross section of at least 90% in the region of an inlet end side (29).

8. Device (1) according to one of the preceding patent claims, in which the at least one inflow channel (3) has a flow cross section (32) which is reduced from an inlet opening (30) to an outlet opening (31).

9. Device (1) according to one of the preceding patent claims, in which a plurality of the inflow channels (3) is surrounded by at least one return flow channel (6).

10. Method for the treatment of an exhaust-gas flow (2) having at least the following steps:
(a) supplying an exhaust-gas flow (2) into at least one inflow channel (3) of a device (1) for the treatment of an exhaust-gas flow,
(b) generating a temperature increase in the exhaust-gas flow (2) as a result of an exothermic reaction in a rear region (5) of the inflow channel (3),
(c) returning the exhaust-gas flow (2) in at least one return flow channel (6) of the device (1) for the treatment of an exhaust-gas flow,
(d) generating an exchange of heat from the exhaust-gas flow (2) in the return flow channel (6) to a front region (4) of the at least one inflow channel (3);
wherein the at least one inflow channel (3) and the at least one return flow channel (6) are aligned with respect to one another according to the counterflow principle,
**characterized in that**
a gas inlet location (9), which varies as a function of a parameter of the exhaust-gas flow (2), is predefined with step (a).

11. Method according to patent claim 10, in which the parameter of the exhaust-gas flow (2) is at least one from the following group:
temperature, hydrocarbon content, carbon monoxide content, oxygen content.

12. Method according to patent claim 10 or 11, in which the parameter is calculated.

13. Method according to one of patent claims 10 to 12, in which step (b) is carried out such that, under varying parameters of the approaching exhaust-gas flow (2), a predetermined temperature of the exhaust gas as it leaves the inflow channel (3) is not exceeded.

14. Method according to one of patent claims 10 to 13, in which the composition of the approaching exhaust-gas flow (2) is influenced taking into consideration the prevailing conditions in the device (1).

15. Vehicle (21) having a device (11) for the treatment of an exhaust-gas flow (2) according to one of patent claims 1 to 9.

## Revendications

1. Dispositif (1) destiné au traitement d'un flux de gaz d'échappement (2) comportant au moins un canal d'afflux (3) avec une région antérieure (4) et une région arrière (5) ainsi qu'au moins un canal de reflux (6), dans la région arrière (5) de l'au moins un canal d'afflux (3) un premier revêtement (7) étant mis à disposition qui favorise une réaction exotherme du flux de gaz d'échappement (2) et dans la région antérieure (4) du canal d'afflux (3) des moyens pour le transfert de chaleur d'un canal de reflux (6), étant réalisés, l'au moins un canal d'afflux (3) et l'au moins un canal de reflux étant orientés l'un par rapport à l'autre selon le principe du contre-courant, **caractérisé en ce que** des moyens d'alimentation (8) sont prévus pour le flux de gaz d'échappement (2) dans l'au moins un canal d'afflux (3), et **en ce qu'**un endroit d'entrée du gaz variable (9) est réalisé dans le canal d'afflux (3).

2. Dispositif (1) selon la revendication 1, dans le cas duquel les moyens d'alimentation (8) comprennent une plaque bimétallique (10).

3. Dispositif (1) selon l'une des revendications précédentes, dans le cas duquel il y a un deuxième revêtement (11) dans l'au moins un canal de reflux (6).

4. Dispositif (1) selon l'une des revendications précédentes, dans le cas duquel la région antérieure (4) a une étendue (12) d'au moins 50 mm.

5. Dispositif (1) selon l'une des revendications précédentes, dans le cas duquel une région de déviation est mise à disposition entre l'au moins un canal d'afflux (13) et l'au moins un canal de reflux (6), au moins un des composants y étant au moins partiellement agencés :
filtre à particules, convertisseur catalytique (15), capteur de mesure (17), entrée d'agent de réaction (18).

6. Dispositif (1) selon l'une des revendications précédentes, dans le cas duquel une pluralité de canaux d'afflux (3) et une pluralité de canaux de reflux (6) sont agencés dans au moins une couche (19), l'au moins une couche (19) étant agencée en plusieurs couches (20).

7. Dispositif (1) selon l'une des revendications précédentes, dans le cas duquel le dispositif (1) a dans la région d'une face frontale d'entrée (29) une section libre d'au moins 90 %.

8. Dispositif (1) selon l'une des revendications précédentes, dans le cas duquel l'au moins un canal d'afflux (3) a une section à écoulement (32) qui diminue d'une ouverture d'entrée (30) jusqu'à une ouverture de sortie (31).

9. Dispositif (1) selon l'une des revendications précédentes, dans le cas duquel une pluralité des canaux d'afflux (3) est entourée par au moins un canal de reflux (6) :

10. Procédé destiné au traitement d'un flux de gaz d'échappement (2) avec au moins les étapes suivantes :
(a) Apport d'un flux de gaz d'échappement (2) dans au moins un canal d'afflux (3) d'un dispositif (1) pour traiter un gaz d'échappement,
(b) Provoquer une augmentation de température du flux de gaz d'échappement (2) par suite d'une réaction exotherme dans une région arrière (5) du canal d'afflux (3),
(c) ramener le flux de gaz d'échappement (2) dans au moins un canal de reflux (6) du dispositif (1) destiné au traitement d'un gaz d'échappement,
(d) provoquer un échange de chaleur du flux de gaz d'échappement (2) dans le canal de reflux (6) jusqu'à une région antérieure (4) de l'au moins un canal d'afflux (3) ;
l'au moins un canal d'afflux (3) et l'au moins un canal de reflux (6) étant orientés l'un par rapport à l'autre selon le principe du contre-courant et **caractérisé en ce qu'**avec l'étape (a) un endroit d'entrée du gaz (9) changeable est prédéterminé en fonction d'un paramètre du flux de gaz d'échappement (2) dans le canal d'afflux (3).

11. Procédé selon la revendication 10, dans le cas duquel le paramètre du flux de gaz d'échappement (2) est au moins choisi parmi le groupe contenant : la température, la teneur en hydrocarbures, en monoxyde de carbone, et en oxygène.

12. Procédé selon la revendication 10 ou 11, dans le cas duquel le paramètre est calculé.

13. Procédé selon l'une des revendications 10 à 12, dans le cas duquel étape (b) est mise en oeuvre de manière telle que lorsque les paramètres du flux de gaz d'échappement arrivant (2) varient, une température prédéterminée du gaz d'échappement n'est pas dépassée.

14. Procédé selon l'une des revendications 10 à 13, dans le cas duquel la composition du flux de gaz d'échappement (2) arrivant est influencée en tenant compte des conditions régnant dans le dispositif (1).

15. Véhicule (21) doté d'un dispositif (11) pour le traitement d'un flux de gaz d'échappement (2) selon l'une des revendications 1 à 9.
